# EUROPEAN PATENT APPLICATION

(11) **EP 4 382 431 A1**
(43) Date of publication of application: **12.06.2024**
(21) Application number: 23211596.4
(22) Date of filing: 22.11.2023
(51) Int. Cl.: B64D 37/00, B64D 37/14, B64D 37/32, B67D 7/04

(54) **AIRCRAFT REFUELLING SYSTEM**

(30) Priority: 07.12.2022 GB 202218415
(71) Applicant: Airbus Operations Limited, Bristol BS34 7PA (GB)
(72) Inventor: FALLON, Adam, Bristol, BS34 7PA (GB)
(74) Representative: Ribeiro, James Michael

(57) **Abstract**

An aircraft (1) comprising: a fuel tank (18a, 18b), and a refuelling system (25) configured to feed fuel into the fuel tank, wherein the refuelling system comprises a sensor (38). The sensor is configured to measure a composition of fuel in the refuelling system before it is fed into the fuel tank, and the sensor is further configured to generate an output based on the measured composition.

## Description

### FIELD OF THE INVENTION

The present invention relates to an aircraft comprising: a fuel tank, and a refuelling system.

### BACKGROUND OF THE INVENTION

Delivering the correct type of fuel to an aircraft can be difficult, particularly as newer aircraft move toward using sustainable aviation fuel (SAF) while older aircraft rely on conventional aviation fuel. It is also difficult to ensure that the quality of fuel delivered meets the required standard. The fuel quality can deteriorate because of changes in temperature, the presence of contaminants or after extended periods of time.

Misfuelling an aircraft with the incorrect or low-quality fuel can impact engine efficiency, performance and damage components inside the fuel tank. Furthermore, removing the incorrect fuel type or lower quality fuel from an aircraft fuel tank is difficult and time consuming.

### SUMMARY OF THE INVENTION

A first aspect of the invention provides an aircraft comprising: a fuel tank; and a refuelling system configured to feed fuel into the fuel tank; wherein the refuelling system comprises a sensor, the sensor is configured to measure a composition of fuel in the refuelling system before it is fed into the fuel tank, and the sensor is further configured to generate an output based on the measured composition.

Optionally the output comprises an alarm.

Optionally the refuelling system further comprises a valve configured to control a flow of the fuel in the refuelling system, wherein the refuelling system is configured to operate the valve based on the output of the sensor.

Optionally the valve comprises an isolation valve with a closed state in which fuel can be fed through the isolation valve and into the fuel tank; and a closed state in which the isolation valve prevents fuel from flowing into the fuel tank.

Optionally the refuelling system comprises an inlet configured to receive a pressurised fuel supply; an outlet coupled to the fuel tank; and a flow path between the inlet and the outlet, and the sensor is configured to measure a composition of fuel in the flow path.

Optionally the inlet meets ISO standard 45:1990.

Optionally the inlet comprises a poppet valve configured to open when the pressurised fuel supply is attached to the inlet.

Optionally the sensor comprises: a UV absorption sensor, an array spectrometer, a mass spectrometry sensor, a polymethacrylate sensor or a water sensor.

Optionally the fuel tank and the refuelling system are in a wing of the aircraft.

Optionally the refuelling system is mounted to a front spar of the wing of the aircraft.

Optionally an/the outlet of the refuelling system is mounted to the front spar of the wing.

A further aspect of the invention provides a method of feeding fuel into a fuel tank of an aircraft, the method comprising: feeding fuel into a refuelling system onboard the aircraft; measuring a composition of the fuel in the refuelling system with a sensor before it is fed into the fuel tank; generating an output based on the measured composition; and feeding the fuel from the refuelling system into the fuel tank.

A further aspect of the invention provides a method of measuring a composition of fuel, the method comprising: feeding fuel into a refuelling system onboard an aircraft; measuring a composition of the fuel in the refuelling system with a sensor; and generating an output based on the measured composition.

### BRIEF DESCRIPTION OF THE DRAWINGS

Embodiments of the invention will now be described with reference to the accompanying drawings, in which:
Figure 1 shows an aircraft;
Figure 2 shows a schematic top view of an aircraft wing;
Figure 3 shows a cross-sectional view of a leading edge portion of the wing;
Figure 4 shows a schematic diagram of the refuelling control system;
Figure 5 shows a flow diagram of a method of refuelling an aircraft.

### DETAILED DESCRIPTION OF EMBODIMENT(S)

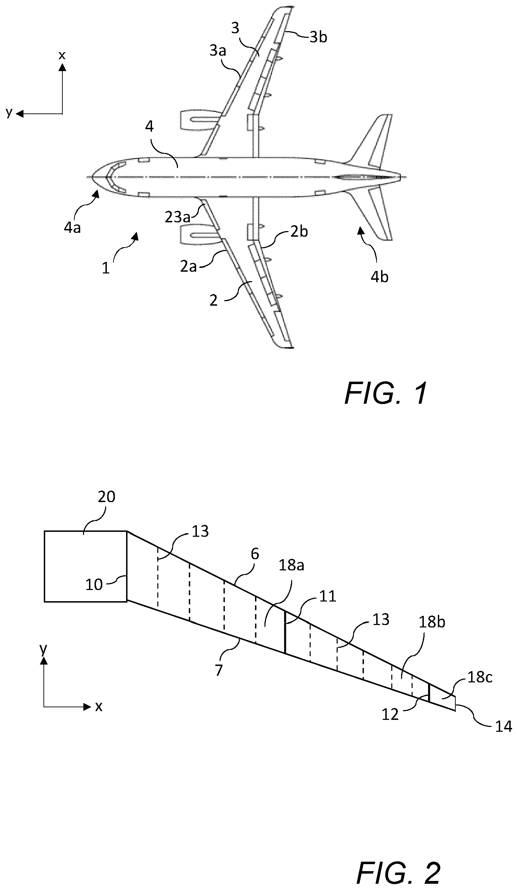

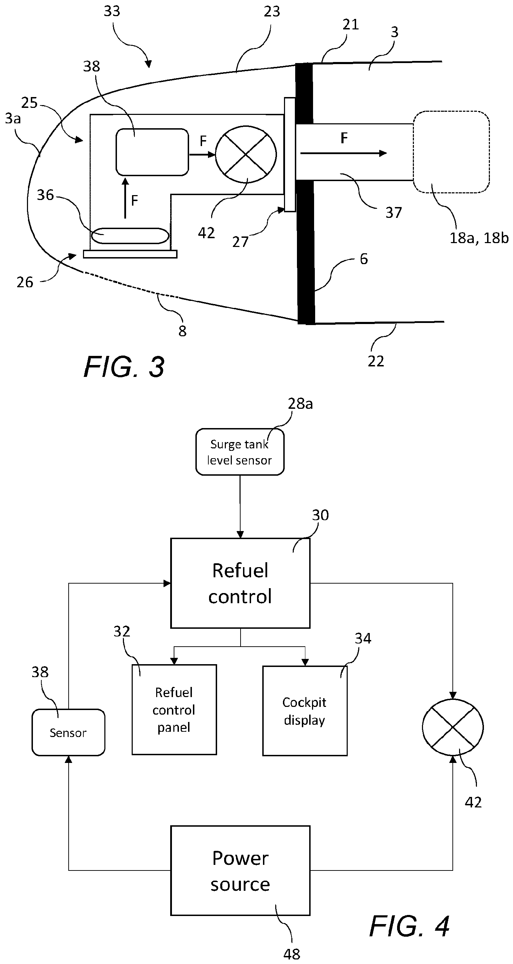

An aircraft 1 shown in Figure 1 comprises a fuselage 4 with port and starboard wings 2,3. Each wing has a cantilevered structure with a length extending in a spanwise direction from a root to a tip, the root being joined to the aircraft fuselage 4. Each wing has a leading edge 2a,3a and a trailing edge 2b,3b. The leading edge 2a,3a may comprise a number of leading edge devices 23a, such as slats and flaps, to help manoeuvre the aircraft 1 during flight. The wings 2,3 are similar in construction so only the starboard wing 3 will be described in detail with reference to Figures 2 and 3.

The main structural element of the wing 3 is a wing box formed by upper and lower covers 21, 22 and front and rear spars 6, 7. The wing 3 also has a leading edge portion 33 (also known as a D-nose) at the leading edge 3a of the wing 3. The leading edge portion 33 is bound by a leading edge fairing 23 and the front spar 6. As shown in the cross-sectional view in Figure 3, the leading edge fairing 23 is forward of the front spar 6.

The leading edge fairing 23 and each cover 21, 22 have a curved aerodynamic surface (the outward surface of the leading edge fairing 23, the upper surface of the upper cover 21 and the lower surface of the lower cover 22) over which air flows during flight of the aircraft 1.

The leading edge portion 33 houses a refuelling system 25, which is discussed in greater detail below.

The wing box also has a plurality of transverse ribs, each rib being joined to the covers 21, 22 and the spars 6, 7. The ribs include an inner-most inboard rib 10 located at the root of the wing box, and a number of further ribs spaced apart from the inner-most rib along the length of the wing box. The inboard rib 10 is an attachment rib which forms the root of the wing box and is joined to a centre wing box 20 within the body of the fuselage 4.

The wing box is divided into three fuel tanks: an inboard wing fuel tank 18a bounded by the inboard rib 10, a mid-span rib 11, the covers 21, 22 and the spars 6, 7; an outboard wing fuel tank 18b bounded by the mid-span rib 11, a first outboard rib 12 near the tip end of the wing box, the covers 21, 22 and the spars 6, 7; and a surge tank 18c bounded by the first outboard rib 12 and the second outboard rib 14 at the tip end of the wing box, the covers, 21,22 and the spars 6,7.

Baffle ribs 13 (shown in dashed lines) form internal baffles within the fuel tanks which divide the fuel tanks into bays. The ribs 10, 11, 12 are sealed to prevent the flow of fuel out of the two fuel tanks, but the baffle ribs 13 are not sealed so that fuel can flow across them between the bays.

The surge tank 18c is connected to the inboard and outboard tanks by a vent pipe system (not shown). During flight, fuel spills into the vent pipes as the aircraft 1 completes different manoeuvres. The spilled fuel enters into the surge tank 18c via the vent pipes, before being introduced back into the outboard tank via the first outboard rib 12 in the surge tank 18c. The fuel may be reintroduced by any number of means, such as using gravity and a one-way valve, or by using a motorised pump system. The surge tank 18c therefore acts as an overflow tank for the inboard and outboard fuel tanks 18a, 18b.

The surge tank 18c includes a surge tank sensor 28a shown in Figure 4 (also known as an overflow sensor, or level sensor) connected to a refuel control system 30 of the aircraft 1. The refuel control system 30 forms part of the aircraft's avionics and is used to control the refuelling of the aircraft 1. The refuel control system 30 is also used to control the operation of the refuelling system 25 as described below.

As shown in Figure 4, the refuel control system 30 receives signals from the surge tank sensor 28a. During the refuelling process, if excess fuel flows into the surge tank 18c because the outboard and inboard fuel tanks 18a, 18b are full, the sensor 28a sends a signal to the refuel control system 30. The refuel control system 30 displays a message to a refuel control panel 32 and/or a cockpit display 34 to stop the refuelling process.

The refuel control panel 32 is a display panel that is located near the inlet 26 of the refuelling system 25. The refuel control panel 32 is typically connected to a fuel computer (not shown). In this example, the refuel control panel 32 is arranged on the underside of the wing 3. The refuel control panel 32 displays information to ground personnel regarding the refuelling process, such as the rate of refuelling and any errors that may arise from the refuelling process.

The cockpit display 34 is a display that is located inside a cockpit (not shown) of the aircraft 1. The cockpit display 34 displays information to flight crew regarding the refuelling process. The refuel control system 30 therefore is arranged to communicate any information, such as errors or status updates, regarding the refuelling process to the ground personnel and the flight crew.

The refuelling system 25 is configured to feed fuel into one or more of the fuel tanks 18a, 18b. Figure 3 shows a cross-sectional view of the leading edge portion 33 of the wing 3, which houses the refuelling system 25. As shown, the refuelling system 25 is positioned forward of the front spar 6.

The refuelling system 25 in this example, comprises an L-shaped fitting with an inlet 26 and an outlet 27. The L-shaped fitting defines a fluid path F between the inlet 26 and the outlet 27. The refuelling system 25 may be formed of any shaped or size component suitable to transport liquid fuel into the fuel tanks 18.

The inlet 26 is accessed via a hatch 8 in the lower part of the leading edge fairing 23. The hatch 8 generally conforms with the outer aerodynamic profile of the leading edge fairing 23. The hatch 8 can be opened so that the inlet 26 of the refuelling system 25 can be accessed by the refuelling operators or ground personnel. In other examples, the inlet 26 may be flush with the lower outer surface of the leading edge fairing 23 so that the inlet 26 generally conforms with the outer aerodynamic profile of the leading edge fairing 23.

The inlet 26 is compliant with the requirements of ISO standard 45:1990, so that it can be coupled with any pressurised aviation fuel source. This ensures that the refuelling system 25 is compatible with existing equipment, such as fuel tankers and hydrant hoses. The refuelling system 25 therefore can be implemented on any number of aircraft and receive fuel from any standard pressurised fuel source.

A poppet valve 36 is located near the inlet 26. The poppet valve 36 is configured to move between a closed position (in which no fuel can pass through from the inlet 26 into the refuelling system 25) and an open position (in which fuel can pass through from the inlet 26 into the refuelling system 25). The poppet valve 36 opens when a pressurised fuel supply is coupled with the inlet 26.

The pressurised fuel supply provides sufficient breakthrough pressure to open the poppet valve 36 once it is coupled with the inlet 26. The poppet valve 36 therefore ensures that fuel cannot enter the refuel system 25 unless it is from a pressurised fuel source.

The refuelling system 25 is arranged to receive a volume of fuel between the inlet 26 and the outlet 27. A sensor 38 is positioned directly in the flow path F so that at least part of the sensor 38 directly contacts the fuel entering the refuelling system 25. As shown schematically in Figure 4, the sensor 38 is powered by a power source 48. Alternatively, the sensor 38 may have an internal power source, such as a battery, or the sensor 38 may be self-powering using energy harvesting technology.

The sensor 38 is arranged to characterise the fuel in the refuelling system 25 before it is fed into the fuel tank 18a or 18b. The sensor 38 characterises the fuel by measuring the composition of the fuel. This may include determining the constituent elements and/or substances in the fuel. The sensor 38 may also measure the composition of the fuel by determining the presence and/or absence of an element or compound in the fuel.

For example, the sensor 38 may be arranged to determine whether the fuel entering the refuelling system is 100% sustainable aviation fuel (SAF) or conventional jet (JETA/A-1/TS-1) fuel. In this example, the sensor 38 may be able to distinguish SAF fuel by detecting an absence or presence of aromatics in the fuel chemistry by using a miniaturised UV (ultra-violet) absorption sensor. Alternatively, the sensor 38 may use simple colour detection methods by using a miniaturised array spectrometer. This is particularly advantageous as a dye is added to the 100% SAF fuel.

The sensor 38 may also be configured to identify solid fuel contaminants, such as metallic deposits. In this example, the sensor 38 may utilise light scatter detection, or any suitable particle detection methods known in the art.

Similarly, the sensor 38 may be configured to detect liquid contaminants, such as unapproved additives or additives in the fuel above the approved dosage level. The sensor 38 may be a miniaturised mass spectrometry type sensor (MEMS device. Micro Electro-Mechanical System), or a polymethacrylate sensor tuned to detect specific contaminants or concentrations of contaminants. MEMS devices are advantageous because they are low energy and compliant to the regulatory requirements for use in a fuel tank environment.

The sensor 38 may also be arranged to detect how much free water is present in the fuel. For example, the sensor 38 may be a miniaturised free water sensor (similar to sensors developed for ground fuel infrastructure) which operate on scattered light sensing. The refuelling system 25 may include any number of sensors 38 that are arranged to measure the composition of the fuel. Advantageously, the sensor 38 may be customised depending on desired characterisation protocols.

The sensor 38 is electronically coupled to the refuel control system 30 as shown in Figure 4. The refuel control system 30 may be pre-programmed with desired characteristics of the fuel, such as the type of fuel, the appropriate contaminant levels, the appropriate threshold of free water in the fuel etc.

Alternatively, the refuel control system 30 may receive compatibility information from an avionics bay of the aircraft 1. The avionics bay may communicate with the refuel control system 30 via wiring relay logic or via a software algorithm in the fuel computer. In another example, the refuel control system 30 may determine the desired levels by manual input via a fuel computer that is connected to the refuel control panel 32.

Once the sensor 38 has successfully measured the composition of the fuel, the sensor 38 generates an output that is communicated to the refuel control system 30. The sensor 38 measures the composition of the fuel and communicates the measured composition to the refuel control system 30. The refuel control system 30 compares the measured data with a pre-determined threshold (either in the refuel control system 30, in the avionics bay, or manually entered via the fuel computer) to determine whether the fuel is the correct fuel type, and/or whether the quality of the fuel in the refuelling system 25 is acceptable.

If the fuel is not acceptable, for example because the measured composition falls outside the pre-determined threshold, the refuel control 30 generates an alarm that is communicated to the refuel control panel 32 and the cockpit display 34.

In other examples, the sensor 38 may contain the pre-determined thresholds for the fuel and the sensor 38 may independently determine whether or not the fuel meets the composition requirements. In this example, the sensor 38 generates an alarm that is communicated to the refuel control 30, which in turn sends the alarm to the refuel control panel 32 and the cockpit display 34. The alarm may be a visual, auditory or any other suitable alarm.

As shown in Figure 4, the refuel control 30 is in electronic communication with an isolation valve 42. The isolation valve 42 is positioned near the outlet 27 of the refuelling system 25. In this example, the outlet 27 is mounted on the front spar 6 of the wing 3 and may be secured to the front spar 6 by any suitable means, such as bolts. The outlet 27 is in fluid communication with one more of the fuel tanks 18a, 18b via pipework 37. In other examples, the L-shaped fitting of the refuelling system 25 may be mounted to the front spar 6 instead of the outlet 27. In this example, the pipework 37 extends through the front spar 6 and is in fluid communication with the outlet 27. In both examples, fuel flows from the refuelling system 25 towards the fuel tanks 18a, 18b across the front spar 6.

As shown schematically in Figure 4, the isolation valve 42 is powered by the power source 48. The isolation valve 42 can be set in a closed state (so that it prevents fuel from entering the fuel tank 18a, 18b) or an open state (so that the fuel can be fed through the isolation valve 42 and into the fuel tank 18a, 18b).

The isolation valve 42 is in electronic communication with the refuel control system 30. The isolation valve 42 is arranged to move between the closed and open positions depending on electronic command signals received from the refuel control system 30. The refuel control system 30 sends an electronic command signal to the isolation valve 42 depending on the composition signal received from the sensor 38. The refuelling system 25 therefore operates the isolation valve 42 based on the output of the sensor 38.

For example, if the fuel measured by the sensor 38 is determined to be acceptable, the refuel control system 30 sends a signal to the isolation valve 42 to open the isolation valve 42. In the open position, fuel can enter the fuel tanks 18a, 18b via the pipework 37. The pressurised fuel source coupled to the inlet 26 pumps fuel into the aircraft 1 via the refuelling system 25.

The isolation valve 42 remains open until the desired level of fuel is pumped into the tanks 18a, 18b, or until the surge tank sensor 28a (or any other sensor system) sends a signal to the refuel control system 30 to indicate that the fuel tanks 18a, 18b are full. The refuel control system 30 then sends a signal to close the isolation valve 42.

If the fuel measured by the sensor 38 is determined to be unacceptable (for example incompatible with the aircraft 1) the refuel control system 30 sends a signal to the isolation valve 42 to close, or remain closed. The refuel control system 30 also sends a signal to the refuel control panel 32 and the cockpit display 34 to indicate that the fuel is not acceptable. The signal may raise an alarm on the refuel control panel 32 or the cockpit display 34 to alert the ground personnel or the flight crew and result in aborting the refuelling process.

If an alarm is raised, the ground personnel may remove a sample of the fuel from the refuelling system 25 and re-test the fuel. If the fuel is confirmed to be incompatible, then the fuel is discarded and the refuelling system 25 is flushed clean. However, if the fuel is determined to be compatible, then the operation of the isolation valve 42 may be overridden via the refuel control system 30 so that refuelling starts again.

Typically, the ground personnel conduct safety checks to determine the type of fuel and/or the quality of fuel stored in the pressurised fuel supply. Typically, these checks are conducted before attaching the fuel supply to the aircraft 1. These may be visual checks, or may be done using any standard safety procedure. However, this is not always accurate and can lead to misfuelling the aircraft. The sensor 38 therefore provides an additional safety measure that can be integrated into the aircraft. Additionally, the sensor 38 may duplicate some of the manual tests to provide an independent check to verify the results of the manual tests.

The refuelling system 25 is advantageous because it determines the fuel type or quality at the point of coupling with a pressurised fuel source. This ensures that the aircraft 1 can be protected from misfuelling irrespective of where the aircraft 1 is located, and is not dependent on the availability and quality of local procedures or fuelling equipment available at each operating airport.

The refuelling system 25 also protects components inside the fuel tank 18a, 18b which may become damaged if they contact or try to operate on the incorrect fuel type.

Furthermore, as only a relatively small volume of fuel is stored in the refuelling system 25, if the fuel is incompatible, only a small volume of fuel needs to be discarded. Advantageously, the refuelling system 25 is smaller and easier to clean compared to the fuel tanks 18a, 18b and pipework 37.

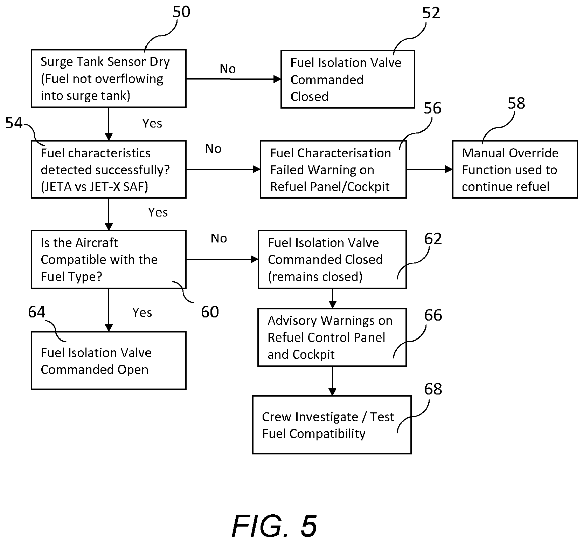

A method of refuelling an aircraft 1 will be described with reference to Figure 5. At step 50, the surge tank sensor 28a sends a signal to the refuel control system 30 to indicate if there is an overflow of fuel into the surge tank 28 from the fuel tanks 18a, 18b. If the surge tank sensor 28a is dry (i.e. there is no fuel in the surge tank 18c) then the refuel control system 30 proceeds to step 54.

If the surge tank sensor 28a is wet (i.e. there is fuel in the surge tank 18c), then the refuel control system 30 sends a signal to close the isolation valve 42 (or keep it closed) at step 52. The refuel control system 30 may also send a signal to the refuel control panel 32 and the cockpit 34 to raise an alarm that the fuel tanks 18a, 18b are overflowing.

At step 54, the sensor 38 measures the composition of the fuel to determine the type of fuel. In this example, the sensor 38 determines whether the fuel is sustainable aviation fuel (JET-X SAF) or conventional aviation fuel (JET-A). If the sensor 38 is unable to measure the composition of the fuel, for example, because of damage or insufficient fuel in the refuelling system 25, the sensor 38 sends a signal to the refuel control system 30 at step 56 to indicate that there has been a fuel characterisation failure.

The refuel control system 30 sends a signal to the refuel control panel 32 and/or the cockpit 34 to indicate the sensor measurement failure. The ground personnel/crew may decide to manually override the refuel system 25 at step 58 to continue the refuelling process without characterising the fuel. This may be done where the fuel composition has already been measured by conventional testing processes using the ground infrastructure or other testing means. Alternatively, the fuel may be removed from the refuelling system 25 and the characterisation steps repeated until the sensor 38 can measure the composition of the fuel successfully at step 54.

If the sensor 38 successfully measures the composition of the fuel at step 54, the sensor 38 communicates the measured composition to the refuel control system 30. The refuel control system 30 then determines whether or not the aircraft is compatible with the fuel type at step 60. As described earlier, this may be done by comparing the measured composition with pre-determined values/thresholds that are stored in the control system 30, in the sensor 38, or elsewhere.

If the fuel type is compatible with the aircraft 1, the refuel control system 30 or the sensor 38 sends a signal to command the isolation valve 44 into an open position at step 64 to commence the refuelling process. Fuel is then pumped through the pressurised fuel supply into the fuel tanks via the refuelling system 25.

If the fuel type is not compatible with the aircraft 1, the isolation valve 44 is commanded closed (or remains closed) at step 62. The refuel control system 30 then generates an alarm and/or warning on the refuel control panel 32 and the cockpit display 34 at step 66 to warn the ground personnel/crew of the incompatible fuel in the refuelling system 25.

At step 68, the ground personnel/flight crew can investigate the fuel in the refuelling system 25. This may include removing the fuel and manually testing the fuel, or cleaning the refuelling system 25 and using new fuel. If the fuel is determined to be compatible by other tests, the advisory warning may be overridden at step 68 to open the isolation valve 42 to commence the refuelling process.

In the example shown in Figure 5, the sensor 38 is used to determine whether or not the fuel is conventional aviation fuel (JETA) or sustainable aviation fuel (JET-X SAF). However, in other examples, the sensor 38 may also be further configured to determine the quality of the fuel type, for example, by determining the presence of contaminants or the amount of free water in the fuel.

The refuelling system 25 is onboard the aircraft, and remains onboard the aircraft during flight of the aircraft. In this example, the refuelling system 25 is located in the leading edge portion 33 of the wing 3. However, the refuelling system 25 could be located onboard the aircraft at any suitable location, such as near the trailing edge 3b of the wing, or in the fuselage 4.

Similarly, the fuel tanks 18a, 18b are located in the wing in this example, but in other embodiments of the invention the fuel tank may be located elsewhere - for instance in a fuel pod carried by the wing, or in the fuselage.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft comprising: a fuel tank; and a refuelling system configured to feed fuel into the fuel tank, wherein the refuelling system comprises a sensor, the sensor is configured to measure a composition of fuel in the refuelling system before it is fed into the fuel tank, and the sensor is further configured to generate an output based on the measured composition.

2. The aircraft of claim 1, wherein the output comprises an alarm.

3. The aircraft of claim 1 or 2, wherein the refuelling system further comprises a valve configured to control a flow of the fuel in the refuelling system, and the refuelling system is configured to operate the valve based on the output of the sensor.

4. The aircraft of claim 3 wherein the valve comprises an isolation valve with an open state in which fuel can be fed through the isolation valve and into the fuel tank; and a closed state in which the isolation valve prevents fuel from flowing into the fuel tank.

5. The aircraft of any preceding claim, wherein the refuelling system comprises an inlet configured to receive a fuel supply; an outlet coupled to the fuel tank; and a flow path between the inlet and the outlet, wherein the sensor is configured to measure a composition of fuel in the flow path.

6. The aircraft of claim 5, wherein the inlet comprises a poppet valve configured to open when the fuel supply is attached to the inlet.

7. The aircraft of any preceding claim, wherein the sensor comprises a UV absorption sensor.

8. The aircraft of any preceding claim, wherein the sensor comprises a spectrometer.

9. The aircraft of any preceding claim, wherein the sensor comprises a mass spectrometry sensor.

10. The aircraft of any preceding claim, wherein the sensor comprises a polymethacrylate sensor.

11. The aircraft of any preceding claim, wherein the sensor comprises a water sensor.

12. The aircraft of any preceding claim, wherein the fuel tank and the refuelling system are in a wing of the aircraft.

13. The aircraft of claim 12, wherein the refuelling system is mounted to a front spar of the wing of the aircraft.

14. A method of feeding fuel into a fuel tank of an aircraft, the method comprising: feeding fuel into a refuelling system onboard the aircraft; measuring a composition of the fuel in the refuelling system with a sensor before it is fed into the fuel tank; generating an output based on the measured composition; and feeding the fuel from the refuelling system into the fuel tank.

15. A method of measuring a composition of fuel, the method comprising: feeding fuel into a refuelling system onboard an aircraft; measuring a composition of the fuel in the refuelling system with a sensor; and generating an output based on the measured composition.
